# EUROPÄISCHE PATENTSCHRIFT

(11) **EP 1 077 388 B1**
(45) Veröffentlichungstag und Bekanntmachung des Hinweises auf die Patenterteilung: **19.03.2003**
(21) Anmeldenummer: 00117557.9
(22) Anmeldetag: 15.08.2000
(51) Int. Cl.: G02C 7/16, G02C 9/00

(54) **An einer Brille zu befestigende Augenklappe**
Clip-on eyeglass shield
Ecran se fixant sur des lunettes

(30) Priorität: 16.08.1999 DE 29913942 U; 04.05.2000 DE 10021817
(43) Veröffentlichungstag der Anmeldung: 21.02.2001
(73) Patentinhaber: Wohlfarth, Annette, 22457 Hamburg (DE)
(72) Erfinder: Wohlfarth, Annette, 22457 Hamburg (DE)
(74) Vertreter: Gerbaulet, Hannes, Dipl.-Ing.

(56) Entgegenhaltungen:
- EP-A- 0 691 560
- DE-U- 29 913 942
- FR-A- 1 298 389
- FR-A- 1 520 282
- US-A- 2 172 573
- US-A- 2 895 376
- US-A- 4 582 401
- US-A- 5 191 897

## Beschreibung

Die vorliegende Erfindung betrifft eine an einer Brille zu befestigende Augenklappe mit einem vor dem Brillenglas anzuordnenden Abdeckfeld und einer sich seitlich an das Abdeckfeld anschließenden Teilmanschette.

Zum Schutze eines erkrankten Auges vor Lichteinfall und mechanischen Einwirkungen und zur Behandlung von Strabismus und Amblyopie wird in der Regel vor dem betreffenden Auge eine Augenklappe angeordnet, welche die Augenhöhle abdeckt. Bei herkömmlichen Augenklappen handelt es sich dabei häufig um eine formstabile und mit einem textilen Gewebe überzogenen Klappe. Nachteilig hieran ist, daß die Klappe unmittelbar mit der Haut, mit dem Auge bzw. Augenlid und mit den Wimpern in Kontakt kommt, was für den Träger der Augenklappe unangenehm sein kann. Dies gilt insbesondere für Kinder, welche in einem solchen Falle die Störung durch die Augenklappe als besonders groß empfinden und unter Umständen versuchen, die Klappe zu entfernen.

Ferner sind aus den Druckschriften FR 1298389 und US 2172573 an einer Brille zu befestigende Augenklappen bekannt. Bei einem derartigen System wird eine Abdeckklappe zwischen Auge und Brillenglas angeordnet und an der Brille befestigt. Die Abdeckklappe ist zur Seite hin in Form einer Teilmanschette fortgesetzt, wobei die Teilmanschette scheuklappenartig die Augenhöhle zur Schläfe hin abschließt und so einen seitlichen Lichteinfall verhindert. Die Teilmanschette schließt auch an Wange und Stirn ab. Die Befestigung einer solchen bekannten Augenklappe erfolgt an der Brille am Bügel und ggf. am Nasensteg. Nachteilig bei dieser Anordnung ist, daß die Abdeckfläche sich zwischen Auge und Brillenglas befindet und daher mit dem Auge in Kontakt kommen kann, was insbesondere von Kindern als unangenehm empfunden wird. Zudem ist die Befestigung der Augenklappe an der Brille verhältnismäßig labil, was wiederum gerade bei Kindern ein Problem darstellt, da hierdurch die Augenklappe bei Unachtsamkeit oder bei spielerischen Bewegungen leicht verrücken kann.

Aufgabe der vorliegenden Erfindung war es, eine Augenklappe der zuletzt genannten Art derartig zu verbessern, daß sie beim Tragen nicht stört und sicher an der Brille befestigt ist. Die Augenklappe soll dabei insbesondere für Kinder geeignet sein.

Diese Aufgabe wird durch die Merkmale des Anspruches 1 gelöst.

Die Augenklappe ist demnach an der Brille zu befestigen und weist ein am Brillenglas anzuordnendes Abdeckfeld sowie eine sich seitlich an das Abdeckfeld anschließende Teilmanschette auf. Erfindungsgemäß ist die Augenklappe dadurch gekennzeichnet, daß das Abdeckfeld zur außenseitigen Überdeckung des Brillenglases vorgesehen ist und dass im Bereich des Abdeckfeldes und/oder in der Teilmanschette und/oder zwischen Abdeckfeld und Teilmanschette mindestens eine Durchbrechung zur Durchführung des Brillenbügels angeordnet ist.

Kernpunkt ist dabei, dass das Brillenglas der Brille von außen, d.h. auf der vom Träger der Brille abgewandten Seite des Brillenglases vollständig überdeckt wird und dass durch die Durchführung des Brillenbügels im Bereich des Abdeckfeldes oder der Teilmanschette oder im Übergangsbereich die Möglichkeit gegeben ist, die Randbereiche der Augenklappe optimal im Stirn-, Schläfen-, Nasen- und Augenumgebungsbereich an die Haut des Trägers anzulegen, so dass eine weitgehende lichtdichte Abdeckung des Auges erfolgt. Dabei ist die Teilmanschette anatomisch geformt. Hierdurch wird einerseits der ophthalmologisch vorgesehene Zweck der Außerfunktionsstellung des Auges erreicht und es ergibt sich andererseits ein hoher Tragekomfort, da das ruhig gestellte Auge nicht mehr durch Lichteinwirkungen irritiert wird. Die Augenklappe wird dabei am Abdeckfeld oder an dessen Randbereichen noch am Brillenglas oder beispielsweise am Sattel- oder Mittelsteg der Brille befestigt, so dass ein sicherer Halt der Augenklappe gewährleistet ist. Außerdem ergibt sich eine ganz leichte Handhabbarkeit der Augenklappe.

Die erfindungsgemäße Durchbrechung an der Augenklappe bietet die Möglichkeit, den Brillenbügel bzw. den an der Fassung des Brillenglases ansetzenden und zum Scharnier des Brillenbügels führenden Steg zwischen dem Abdeckfeld und der Teilmanschette hindurchzuführen, wodurch die Augenklappe an diesem Punkt fest und unverlierbar mit der Brille verbunden wird. Dabei ist es insbesondere möglich, den Brillenbügel von der Rückseite der Augenklappe her durchzustecken, so daß das Abdeckfeld vor dem Brillenglas und die Teilmanschette hinter dem Brillenbügel, das heißt zwischen Kopf und Brillenbügel, zu liegen kommt. Anders als bei der bekannten an einer Brille zu befestigenden Augenklappe ist das Abdeckfeld somit vor dem Brillenglas und nicht dahinter angeordnet. Es kommt daher nicht in störender Weise mit dem Auge in Berührung. Somit kann sich ein Tragegefühl einstellen, das dem normalen Tragegefühl einer Brille entspricht, wobei trotzdem die gewünschte Abdeckung des Blick- und Sehfeldes eintritt, die bei der medizinischen Indikation für das Tragen solcher Augenklappen beabsichtigt ist. Die Anordnung der Teilmanschette hinter dem Brillenbügel hat zudem den Vorteil, daß sie an dieser Stelle die Handhabung des Bügels nicht beeinträchtigt.

Im Übergangsbereich zwischen Abdeckfeld und Teilmanschette können auch mehrere Durchbrechungen vorgesehen sein, so daß je nach Typ und Größe des Brillengestelles eine passende Durchbrechung für das Durchstecken des Brillenbügels ausgewählt werden kann. Ferner kann an der Teilmanschette eine weitere Durchbrechung oder eine Öse vorgesehen sein, durch welche der Brillenbügel ein zweites Mal gesteckt werden kann, so daß sich ein zweiter Befestigungspunkt ergibt und die Augenklappe somit einen stabilen Sitz an dem Brillengestell annimmt. Eine solche zweite Durchbrechung kann vorzugsweise am hinteren Rand der Teilmanschette, also dem letzten Kontaktpunkt zwischen Teilmanschette und Brillenbügel, angeordnet sein.

In einer Weiterentwicklung der Erfindung gemäß Anspruch 2 können am Abdeckfeld Befestigungsmittel angeordnet sein, um die Augenklappe am Brillenglas, der Fassung des Brillenglases und/oder am Mittelsteg der Brille zu fixieren. Durch einen derartigen zweiten Befestigungspunkt zwischen Augenklappe und Brille kann ein fester Sitz der Augenklappe an der Brille gewährleistet werden. Dies ist insbesondere bei Kindern sinnvoll, bei denen die Befestigung der Augenklappe häufig besonderen Beanspruchungen ausgesetzt ist.

Gemäß Anspruch 3 können die zuletzt genannten Befestigungsmittel in Form einer Klemmklammer ausgebildet sein. Diese kann z.B. um den Mittelsteg der Brille oder ein anderes geeignetes Teil der Brille gelegt werden und hierdurch gewährleisten, daß das Abdeckfeld vollflächig auf dem Brillenglas aufliegt. Vorzugsweise steht die Klemmklammer unter einer Federspannung, welche ein Festhalten am Untergrund garantiert. Dies kann z.B. dadurch erreicht werden, daß die Klemmklammer aus einem Federdraht ausgebildet ist.

In einer anderen Ausgestaltung des Befestigungsmittels nach Anspruch 4 kann dieses als Klettverschluß verwirklicht sein. Dabei kann der Klettverschluß z.B. mit einem Band oder einer Lasche zusammenwirken, welche um das Brillenglas oder den Mittelsteg herumgeschlungen wird, um die Augenklappe hieran zu befestigen. Vorzugsweise wird indes ein kleines Klettband im Bereich des Mittelsteges der Brille auf das Gestell aufgeklebt, so daß ein an der Augenklappe angebrachtes korrespondierendes Klettband hiermit verbunden werden kann.

Nach Anspruch 5 besteht die erfindungsgemäße Augenklappe vorzugsweise aus einem reißfesten, formstabilen und wasserfesten Material. Reißfestigkeit garantiert dabei, daß die Durchbrechung zwischen Abdeckfeld und Teilmanschette nicht ausreißt. Formstabilität gewährleistet die Beibehaltung der Form der Augenklappe auch unter Einfluß von Wärme und Feuchtigkeit, und Wasserfestigkeit macht die Augenklappe gegen Schweiß, Tränenflüssigkeit und andere Feuchtigkeit resistent. Ein geeignetes Material ist z.B. Kunststoff, insbesondere Alcantara. Letzteres verbindet die vorteilhaften technischen Eigenschaften mit einem guten optischen Erscheinungsbild.

Nach Anspruch 6 ist vorgesehen, daß das Abdeckfeld und/oder die Teilmanschette mindestens ein Versteifungselement aufweist. Das Versteifungselement kann ein Kunststoff- oder Metallbügel oder ein mit Kunststoff überzogener Metallbügel sein oder als eingearbeitete Versteifungsrippe verwirklicht werden. Vorteilhafterweise ist eine Anzahl von vertikalen und/oder horizontalen Versteifungselementen vorgesehen, um eine Versteifung bzw. Formgebung des Abdeckfeldes und/oder der Teilmanschette zu bewirken.

Der Tragkomfort einerseits und die sichere Halterung und Aufrechterhaltung der Abdeckung wird noch dadurch verstärkt, dass vorteilhafter Weise da Abdeckfeld und/oder die Teilmanschette mindestens ein Versteifungselement bevorzugterweise mehrere Versteifungselemente aufweist. Wenn hier beispielsweise Kunststoff- oder Metallbügel oder eingearbeitete Versteifungsrippen vorgesehen werden, dann ergibt sich eine optimale Anformbarkeit der Augenklappe an die spezielle Physiognomie des Trägers wobei eine ständige optimale Lichtabdeckung erreicht wird, und gleichzeitig ein zu hoher Anlagedruck, wie er beispielsweise durch früher verwendete elastische und auf den Augenbereich aufgedrückte Augenklappen erzeugt wird. In Verbindung mit der Zuschneidbarkeit der Augenklappe, die dadurch bewirkt wird, dass das Material der Augenklappe leicht schneidbar ist, kann mit einfachen Mitteln bei leichtester Handhabbarkeit und ohne großen wirtschaftlichen Aufwand eine Augenklappe beispielsweise an die speziellen Bedürfnisse eines Kindes angepasst werden, die dann einen so hohen Tragekomfort bietet, dass es für das Kind kein Problem mehr darstellt, diese Augenklappe in der vorgesehenen Weise, d.h. zeitweise oder ständig zu verwenden.

Eine weitere vorteilhafte Ausgestaltung der Erfindung besteht darin, dass die Durchbrechung zur Durchführung des Brillenbügels als vertikaler und/oder horizontaler Schlitz ausgebildet ist. Hierdurch kann ein Grundmodell einer Augenklappe bei einer Vielzahl von unterschiedlich geformten und gestalteten Brillen verwendet werden und gleichzeitig eine optimale Anlage des Abdeckfeldes an das Brillenglas erreicht werden.

Gemäß einer weiteren vorteilhaften Ausgestaltung der Erfindung ist vorgesehen, dass die Durchbrechung bzw. der Schlitz auf der Außenseite und/oder der Innenseite der Augenklappe mittels eines Abdeckabschnittes überdeckt ist, der die Durchführung des Brillenbügels zulässt und einen Lichteinfall durch die Durchbrechung bzw. den Schlitz weitgehend verhindert. Durch einen solchen Abdeckabschnitt der auf der Innenseite und/oder der Außenseite des Schlitzes oder der Durchbrechung angebracht vorteilhafter Weise angenäht ist, wird erreicht, dass der Brillenbügel durchgeführt werden kann, ohne dass anschließend ein Lichteinfall erfolgt. Vorteilhafterweise besteht der Abdeckabschnitt aus dem gleichen Material wie die Augenklappe und ist elastisch und flexibel, so dass ein umschmiegendes Abdecken des Brillenbügels möglich wird.

Um eine gute Anpassbarkeit und flexible Einstellbarkeit der Augenklappe an die unterschiedlich ausgebildeten und geformten Mittelstege und Brillentypen (Sattelsteg-Brille, Komfortsteg-Brille, Fassungs-Brille, Halbrand-Brille oder Tragrand-Brille) zu ermöglichen, ist vorgesehen, dass eine einendseitig an der Augenklappe befestigte Übergreiflasche zum Übergreifen und/oder Hintergreifen des Sattel- oder Verbindungsteges einer Brille vorgesehen ist. Mit einer solchen Übergreiflasche kann jede Art von Mittel- oder Verbindungssteg übergriffen oder hintergriffen werden, so dass eine sichere Befestigung und Anlage des Abdeckfeldes an dem Brillenglas durchgeführt werden kann. Die Übergreiflasche ist dabei mit ihrem festen Ende an der Augenlasche befestigt oder als anhängende Lasche herausgeschnitten und lässt sich mit ihrem freien Ende den Mittelsteg übergreifend oder hintergreifend auf der Augenklappe befestigen, wobei hier vorteilhafterweise der freie Endabschnitt über eine Klettverbindung, Butterfly-Hakenbandverbindung, Pilzkopfverbindung, eine lösbare Klebeverbindung, eine Druckknopfverbindung oder dgl. auf der Augenklappe den Sattel- oder Verbindungssteg über- und/oder hintergreifend lösbar befestigbar ist.

Um den ophthalmologischen Zweck der Augenklappe noch sicherer zu erfüllen ist vorgesehen, dass die Innenseite der Augenklappe, die dem Auge eines Trägers der Augenklappe zugewandt ist, als leicht absorbierende, bevorzugterweise schwarze Oberfläche oder Beschichtung ausgebildet ist. Hierdurch wird erreicht, dass auch im Falle, dass die Augenklappe nicht optimal an den Träger angepasst wurde oder auch nicht angepasst werden kann, der Zweck der Augenklappe sicher erreicht wird, dass ein Lichteinfall zumindest weitgehend vermieden wird, da einfallendes Licht von der Oberfläche absorbiert wird.

Im folgenden wird mit Hilfe der Figuren zwei Ausführungsbeispiele der Erfindung erläutert. Es zeigen
- Fig. 1: in einer schaubildlichen Ansicht die erfindungsgemäße Augenklappe 100;
- Fig. 2: die Augenklappe gemäß Fig. 1 nach Aufsetzen auf ein Brillengestell,
- Fig. 3: in einer schaubildlichen Ansicht eine weitere Ausführungsform einer Augenklappe nach Aufsetzen auf eine (teilweise dargestellte Brille), und
- Fig. 4: in einer Rückansicht die Augenklappe gemäß Fig. 3 ohne Brille.

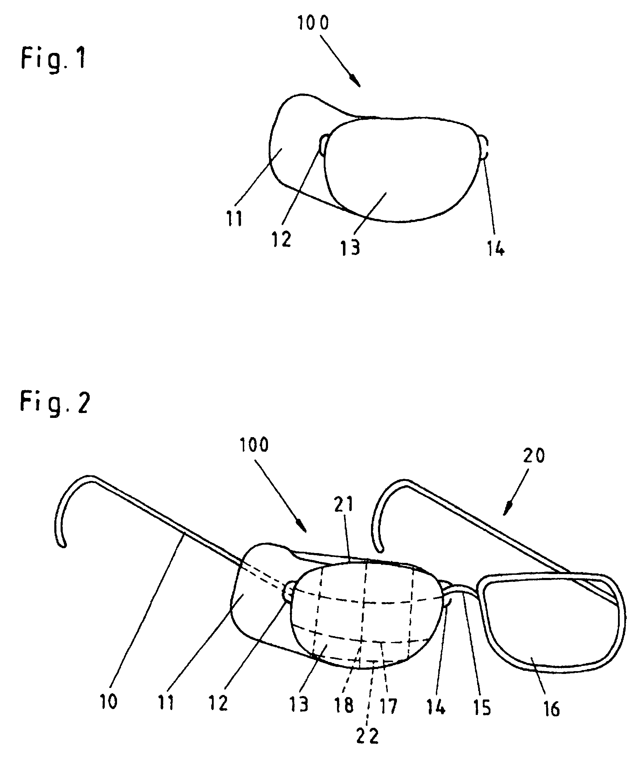

In Fig. 1 ist die erfindungsgemäße Augenklappe 100 in einer perspektivischen Ansicht von vorne gezeigt. Dargestellt ist dabei eine Augenklappe für das linke Auge. Aufgrund der Asymmetrie des Kopfes können die Augenklappen in der Regel nicht spiegelsymmetrisch und damit bezüglich des rechten oder linken Auges vertauschbar ausgebildet werden. Gleichwohl ist eine vereinfachte spiegelsymmetrische Gestaltung in medizinisch weniger wichtigen Fällen denkbar, in denen es mehr auf niedrige Herstellungs- und Anschaffungskosten als einen optimalen Sitz ankommt.

Die Augenklappe 100 besteht im wesentlichen aus einem flächigen Abdeckfeld 13, welches eine in etwa rechteckige Grundform mit gewölbten Seiten und abgerundeten Ecken hat. An etwa die Hälfte des Umfanges des Abdeckfeldes 13 ist eine Teilmanschette 11 angesetzt, welche sich im wesentlichen senkrecht zum Abdeckfeld 13 erstreckt. Im Naht- bzw. Verbindungsbereich zwischen Abdeckfeld 13 und Teilmanschette 11 ist eine Durchbrechung 12 vorgesehen. An der der Durchbrechung gegenüberliegenden Seite des Abdeckfeldes 13 befindet sich eine Klemmklammer 14.

Die Funktion und Verwendung der Augenklappe 100 wird aus Fig. 2 erkennbar, in welcher die Augenklappe auf eine Brille aufgesetzt dargestellt ist. Die Brille besteht im wesentlichen aus zwei Brillenbügeln 10 und zwei Brillengläsern 16, welche von einer Glasfassung gehalten und durch einen Mittelsteg 15 verbunden sind. Dabei ist es nicht unbedingt erforderlich, daß tatsächlich Brillengläser eingesetzt sind. Insbesondere kann das Brillenglas aus Kosten- oder Gewichtsgründen auf der mit der Augenklappe abzudeckenden Seite fehlen. Die Brille kann darüber hinaus auch insgesamt glaslos ausgebildet sein, wobei das Brillengestell dann lediglich als optisch ansprechende und funktionelle Halterung für die Augenklappe dient.

Die Augenklappe 100 aus Fig. 1 deckt das linke Brillenglas ab. Die Teilmanschette 11 verhindert den Einfall von Licht von der Seite des Kopfes her. Sie erstreckt sich vorzugsweise bis an den Kopf bzw. die Schläfen.

Der linke Brillenbügel 10 ist von innen her durch die Durchbrechung 12 zwischen Abdeckfeld 13 und Teilmanschette 11 gesteckt. Dies führt dazu, daß die Augenklappe 100 mit dem Abdeckfeld außen auf dem Brillenglas angeordnet ist, während sich die Teilmanschette 11 hinter dem Brillenbügel 10 befindet und daher dessen Handhabung nicht beeinträchtigt.

Die gegenüberliegende Seite des Abdeckfeldes 13 ist am Brillengestell bzw. dem Mittelsteg 15 mit Hilfe der Klemmklammer 14 befestigt. Diese läßt sich in einfacher Weise auf den Mittelsteg 15 aufstecken bzw. dort festclippen. Die Augenklappe 100 erhält somit einen sicheren Sitz auf der Brille, ist jedoch jederzeit wieder hiervon entfernbar, ohne daß Spuren zurückbleiben.

Bei der in Figur 2 dargestellten Ausführungsform der Augenklappe 100 ist vorgesehen, daß das Abdeckfeld 13 und die Teilmanschette 11 mit Versteifungselementen 17, 18 versehen sind. Hierbei kann es sich um horizontal angeordnete Versteifungselemente 17 und vertikal angeordnete Versteifungselemente 18 in Form von in das Abdeckfeld 13 und/oder die Teilmanschette 11 eingearbeiteten Kunststoff- oder Metallbügeln handeln. Auch sind mit Kunststoff überzogene Metallbügel denkbar. Diese Metallbügel oder Metalldrähte sind einerseits zur Versteifung des Abdeckfeldes 13 und/oder Teilmanschette 11 vorgesehen bzw. sie können dazu verwendet werden, dem Abdeckfeld 13 und der Teilmanschette 11 eine bestimmte Form zu geben, um eine optimale Anpassung an die Brille bzw. an dem Brillenträger zu gewährleisten.

Anstelle der dargestellten Versteifungselemente können auch eingearbeitete Versteifungsrippen vorgesehen sein.

Am oberen Rand des Abdeckfeldes 13 schließt sich ein Teilabschnitt 21 der Teilmanschette an, der beim Tragen der Brille 20 an die Stirn oder den Augenbrauenbereich anliegend den Lichteinfall von oben verhindert. Dem entsprechend ist am unteren Rand des Abdeckfeldes 13 ein weiterer Teilabschnitt 22 vorgesehen, der an der Wange eines Brillenträgers anliegt.

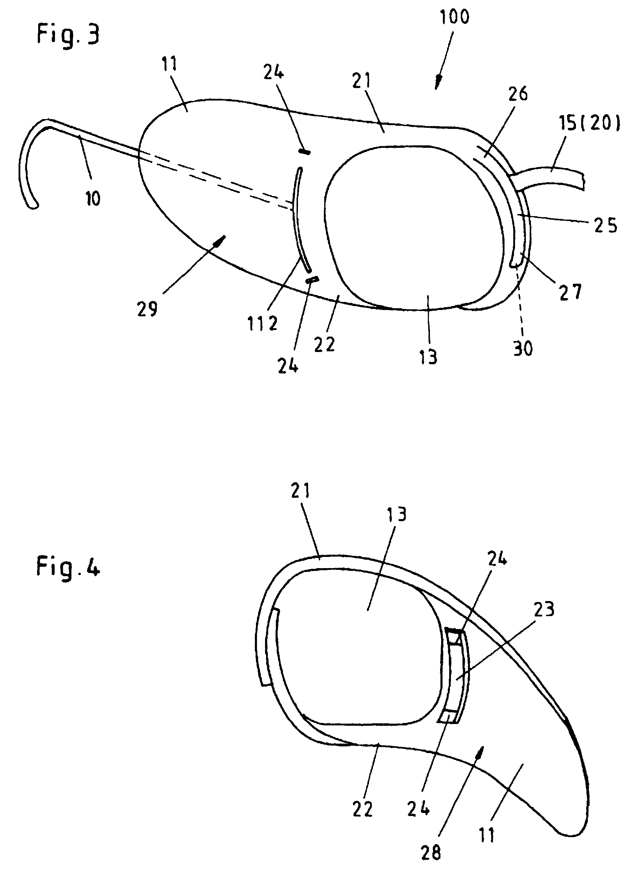

In Fig. 3 und 4 ist eine weitere Ausführungsform der Augenklappe 100 dargestellt, bei der die Durchbrechung als vertikaler Schlitz 112 ausgebildet ist. Auf der Innenseite 28 der Augenklappe 100 ist ein Abdeckabschnitt 23 den Schlitz 112 überdeckend angeordnet worden, wobei der Abdeckabschnitt 23 nur oberhalb bzw. unterhalb des Schlitzes 112 mit einer Naht 24 gehaltert ist und ansonsten frei auf der Innenseite 28 der Augenklappe 100 und damit auf dem Schlitz 112 aufliegt, so dass der Bügel 10 hinter den Abdeckabschnitt 23 und durch den Schlitz 112 geschoben werden kann, wie dies in Fig. 3 angedeutet ist. Der Abdeckabschnitt 23 schmiegt sich dabei an den Brillenbügel 10 und die Oberfläche der Innenseite 28 an, so dass ein Lichtdurchtritt vermieden wird.

Weiterhin ist in dem Bereich, der einem Mittelsteg 15 einer Brille 20 zuzuordnen ist eine Übergreiflasche 25 angeordnet, die mit dem festen Ende 26 fest mit der Augenklappe 100 verbunden ist. Die Übergreiflasche ist frei bewegbar und mit ihrem freien Ende 27 lösbar mit der Augenklappe verbindbar. Hierzu ist eine in der Zeichnung nicht dargestellte Klettverbindung 30 vorgesehen. Mit der Übergreiflasche 25 kann der Mittelsteg 15 entweder übergriffen oder hintergriffen werden, je nachdem wo er sich in Relation zur Augenklappe befindet. Auf diese Weise wird die Augenklappe 100 am Mittelsteg 15 befestigt.

## Patentansprüche

1. An einer Brille (20) mit mindestens einem Brillenbügel zu befestigende Augenklappe (100) mit einem am Brillenglas (16) anzuordnenden Abdeckfeld (13) und einer sich seitlich an das Abdeckfeld (13) anschließenden Teilmanschette (11),
**dadurch gekennzeichnet, daß** das Abdeckfeld (13) zur außenseitigen Überdeckung des Brillenglases (16) vorgesehen ist und dass im Bereich des Abdeckfeldes (13) und/oder in der Teilmanschette (11) und/oder zwischen Abdeckfeld (13) und Teilmanschette (11) mindestens eine Durchbrechung (12) zur Durchführung des Brillenbügels (10) angeordnet ist.

2. Augenklappe nach Anspruch 1,
**dadurch gekennzeichnet, daß** am Abdeckfeld (13) Befestigungsmittel (14) zur Fixierung der Augenklappe (100) am Brillenglas (16), an der Fassung des Brillenglases und/oder am Mittelsteg (15) der Brille angeordnet sind.

3. Augenklappe nach Anspruch 2,
**dadurch gekennzeichnet, daß** die Augenklappe (100) eine Klemmklammer (14) als Befestigungsmittel aufweist.

4. Augenklappe nach Anspruch 2 oder 3,
**dadurch gekennzeichnet, daß** die Augenklappe (100) einen Klettverschluß als Befestigungsmittel aufweist.

5. Augenklappe nach einem der Ansprüche 1 bis 4,
**dadurch gekennzeichnet, daß** die Augenklappe (100) aus einem reißfesten, formstabilen und wasserfesten Material besteht, vorzugsweise aus einem Kunststoff wie Alcantara.

6. Augenklappe nach einem der Ansprüche 1 bis 6,
**dadurch gekennzeichnet, daß** das Abdeckfeld (13) undloder die Teilmanschette (11) mindestens ein Versteifungselement (17, 18) aufweist.

7. Augenklappe nach einem der Ansprüche 1 bis 6,
**dadurch gekennzeichnet, daß** das Versteifungselement (17, 18) ein Kunststoff- oder Metallbügel ist.

8. Augenklappe nach einem der Ansprüche 1 bis 6,
**dadurch gekennzeichnet, daß** das Versteifungselement eine eingearbeitete Versteifungsrippe ist.

9. Augenklappe nach einem der Ansprüche 1 bis 8,
**dadurch gekennzeichnet, daß** eine Anzahl von vertikalen und/oder horizontalen Versteifungselementen (17, 18) vorgesehen sind.

10. Augenklappe nach einem der Ansprüche 1 bis 9,
**dadurch gekennzeichnet, daß** die Teilmanschette auch einen an die Stirn anliegenden Teilabschnitt (21) und/oder einen an die Wange anlegbaren Teilabschnitt (22) aufweist.

11. Augenklappe nach einem der Ansprüche 1 bis 10,
**dadurch gekennzeichnet, dass** die Durchbrechung (12) zur Durchführung des Brillenbügels (10) als vertikaler und/oder horizontaler Schlitz (112) ausgebildet ist.

12. Augenklappe nach einem der Ansprüche 1 bis 11,
**dadurch gekennzeichnet, dass** die Durchbrechung (12) bzw. der Schlitz (112) auf der Außenseite und/oder der Innenseite der Augenklappe (100) mittels eines Abdeckabschnitts (23) überdeckt ist, der die Durchführung des Brillenbügels (10) zulässt und einen Lichteinfall durch die Durchbrechung (12) bzw. den Schlitz (112) weitgehend verhindert.

13. Augenklappe nach Anspruch 12,
**dadurch gekennzeichnet, dass** der Abdeckabschnitt nur in ein oder zwei Bereichen (24) an der Augenklappe (100) fixiert ist, um ein Durchführung des Brillenbügels (10) und ein weitgehendes Verschließen der Durchbrechung (12) bzw. des Schlitzes (112) bei durchgeführtem Brillenbügel (10) zu bewirken.

14. Augenklappe nach einem der Ansprüche 1 bis 13,
**dadurch gekennzeichnet, dass** eine einendseitig (26) an der Augenklappe (100) befestigte Übergreiflasche (25) zum Übergreifen und/oder Hintergreifen des Sattel- oder Verbindungstegs einer Brille vorgesehen ist.

15. Augenklappe nach Anspruch 14,
**dadurch gekennzeichnet, dass** die Übergreiflasche (25) mit ihrem freien Endabschnitt (27) auf der Augenkappe befestigbar ist.

16. Augenklappe nach Anspruch 15,
**dadurch gekennzeichnet, dass** der freie Endabschnitt (27) über eine Klettverbindung, Butterfly-Hakenbandverbindung Pilzkopfverbindung, eine lösbare Klebeverbindung, eine Druckknopfverbindung oder dgl. auf der Augenklappe dem Sattel- oder Verbindungssteg über- und/oder hintergreifend lösbar befestigbar ist.

17. Augenklappe nach einem der Ansprüche 1 bis 16,
**dadurch gekennzeichnet, dass** die Innenseite (28) der Augenklappe (100), die dem Auge eines Trägers der Augenklappe zugewandt ist, als leichtabsorbierende, bevorzugterweise schwarze Oberfläche ausgebildet ist.

18. Augenklappe nach einem der Ansprüche 1 bis 17,
**dadurch gekennzeichnet, dass** die Augenklappe (100) insbesondere die Teilmanschette (11) und/oder die Teilabschnitte (21, 22) aus einem leicht zuschneidbarem Material hergestellt wird.

## Claims

1. Spectacle glass shield (100), to be fixed on spectacles (20) with at least one bow of spectacles, with one covering part (13) to be placed on the spectacle glass (16) and one partial sleeve (11) laterally joined to the covering part (13),
**characterized in**
**that** the covering part (13) is provided for the outer covering of the spectacle glass (16) and that at least one opening (12) for the leadthrough of the spectacle bow (10) is placed in the area of the covering part (13) and/or in the partial sleeve (11) and/or between the covering part (13) and the partial sleeve (11).

2. Spectacle glass shield according to claim 1,
**characterized in**
**that** fixing means (14) for fixing the spectacle glass shield (100) on the spectacle glass (16) on the covering part (13) are placed on the mount of the spectacle glass and/or on the middle bridge (15) of the spectacles.

3. Spectacle glass shield according to claim 2,
**characterized in**
**that** the spectacle glass shield (100) has a clamping clip (14) as a fixing means.

4. Spectacle glass shield according to claim 2 or 3,
**characterized in**
**that** the spectacle glass shield (100) has a Velcro fastening as a fixing means.

5. Spectacle glass shield according to any of the claims 1 to 4,
**characterized in**
**that** the spectacle glass shield (100) is made of a dimensionally stable waterproof material resistent to tearing, preferably of a synthetic material such as synthetic suede.

6. Spectacle glass shield according to any of the claims 1 to 6,
**characterized in**
**that** the covering part (13) and/or the partial sleeve (11) has at least one stiffening element (17, 18).

7. Spectacle glass shield according to any of the claims 1 to 6,
**characterized in**
**that** the stiffening element (17, 18) is a plastic or metal bow.

8. Spectacle glass shield according to any of the claims 1 to 6,
**characterized in**
**that** the stiffening element is a built-in stiffening rib.

9. Spectacle glass shield according to any of the claims 1 to 8,
**characterized in**
**that** a number of vertical and/or horizontal stiffening elements (17, 18) is provided for.

10. Spectacle glass shield according to any of the claims 1 to 9,
**characterized in**
**that** the partial sleeve also has a partial section (21) tightly fitting to the forehead and/or a partial section (22) which can be applied to the cheek.

11. Spectacle glass shield according to any of the claims 1 to 10,
**characterized in**
**that** the opening (12) for the leadthrough of the bow of bow of spectacles (10) is configured as a vertical and/or horizontal slit (112).

12. Spectacle glass shield according to any of the claims 1 to 11,
**characterized in**
**that** the opening (12) or the slit (112) is covered on the outside and/or on the inside of the spectacle glass shield (100) by means of a covering section (23) which allows the leadthrough of the bow of spectacles (10) and which prevents to a large extent an incidence of light through the opening (12) or the slit (112).

13. Spectacle glass shield according to claim 12,
**characterized in**
**that** the covering section is only fixed in one or two areas (24) on the spectacle glass shield (100) in order to cause a leadthrough of the bow of spectacles (10) and, to a large extent, the closing of the opening (12) or of the slit (112), the bow of spectacles (10) being led through.

14. Spectacle glass shield according to any of the claims 1 to 13,
**characterized in**
**that** an overlap strap (25) fixed at the one end (26) on the spectacle glass shield (100) is provided for overlapping and/or back holding the saddle or connection bridge of spectacles.

15. Spectacle glass shield according to claim 14,
**characterized in**
**that** the overlap strap (25) can be fixed on the spectacle glass shield with its free end section (27).

16. Spectacle glass shield according to claim 15,
**characterized in**
**that** the free end section (27) can be removably fixed on the spectacle glass shield by overlapping or back holding the saddle or connection bridge by a Velcro fastening, a butterfly hook and loop connvection, a mushroom connection, a removable glueing, a push-button connection or the like.

17. Spectacle glass shield according to any of the claims 1 to 16,
**characterized in**
**that** the inner side (28) of the spectacle glass shield (100), which is turned to the eye of a spectacle wearer, is configured as a light absorbing surface, preferably as a black surface.

18. Spectacle glass shield according to any of the claims 1 to 17,
**characterized in**
**that** the spectacle glass shield (100), in particular the partial sleeve (11) and/or the partial sections (21, 22), is made of a material which can be easily cut up.

## Revendications

1. Couvre-oeil (100) à fixer sur des lunettes (20) avec au moins une branche de lunettes avec un pan de recouvrement (13) à placer sur le verre de lunettes (16) et avec une manchette partielle (11) se rattachant latéralement au pan de recouvrement (13),
**caractérisé en ce**
**que** le pan de recouvrement (13) est prévu pour le recouvrement côté extérieur du verre de lunettes (16) et qu'au moins une découpure (12) pour faire traverser la branche de lunettes (10) est placée dans la zone du pan de recouvrement (13) et/ou dans la manchette partielle (11) et/ou entre le pan de recouvrement (13) et la manchette partielle (11).

2. Couvre-oeil selon la revendication 1,
**caractérisé en ce**
**que** des moyens de fixation (14) sont placés sur le pan de recouvrement (13) pour fixer le couvre-oeil (100) sur le verre de lunettes (16), sur la monture du verre de lunettes et/ou sur l'arcade centrale (15) des lunettes.

3. Couvre-oeil selon la revendication 2,
**caractérisé en ce**
**que** le couvre-oeil (100) présente une pince de serrage (14) comme moyen de fixation.

4. Couvre-oeil selon la revendication 2 ou 3,
**caractérisé en ce**
**que** le couvre-oeil (100) présente une fermeture autoagrippante comme moyen de fixation.

5. Couvre-oeil selon l'une des revendications 1 à 4,
**caractérisé en ce**
**que** le couvre-oeil (100) est constitué en un matériau résistant à la déchirure, indéformable et résistant à l'eau, de préférence en une matière synthétique comme le microdaim.

6. Couvre-oeil selon l'une des revendications 1 à 6,
**caractérisé en ce**
**que** le pan de recouvrement (13) et/ou la manchette partielle (11) présente au moins un élément raidisseur (17, 18).

7. Couvre-oeil selon l'une des revendications 1 à 6,
**caractérisé en ce**
**que** l'élément raidisseur (17, 18) est une branche en matière plastique ou en métal.

8. Couvre-oeil selon l'une des revendications 1 à 6,
**caractérisé en ce**
**que** l'élément raidisseur est une nervure de raidissement intégrée.

9. Couvre-oeil selon l'une des revendications 1 à 8,
**caractérisé en ce**
**qu'**il est prévu un nombre d'éléments raidisseurs (17, 18) verticaux et/ou horizontaux.

10. Couvre-oeil selon l'une des revendications 1 à 9,
**caractérisé en ce**
**que** la manchette partielle présente aussi une section partielle (21) adhérant au front et/ou une section partielle (22) pouvant être posée sur la joue (22).

11. Couvre-oeil selon l'une des revendications 1 à 10,
**caractérisé en ce**
**que** la découpure (12) pour faire traverser la branche de lunettes (10) est configurée comme une fente verticale et/ou horizontale (112).

12. Couvre-oeil selon l'une des revendications 1 à 11,
**caractérisé en ce**
**que** la découpure (12) ou la fente (112) est recouverte sur le côté extérieur et/ou le côté intérieur du couvre-oeil (100) au moyen d'une section de recouvrement (23) qui permet le passage de la branche de lunettes (10) et qui empêche largement une incidence de lumière à travers la découpure (12) ou la fente (112).

13. Couvre-oeil selon la revendication 12,
**caractérisé en ce**
**que** la section de recouvrement n'est fixée que dans une ou deux zones (24) sur le couvre-oeil (100) pour provoquer un passage de la branche de lunettes (10) et une quasi fermeture de la découpure (12) ou de la fente (112) lorsque la branche de lunettes (10) est passée à travers.

14. Couvre-oeil selon l'une des revendications 1 à 13,
**caractérisé en ce**
**qu'**une attache de recouvrement (25) fixée à l'une des extrémités (26) sur le couvre-oeil (100) est prévue pour recouvrir et/ou saisir par derrière l'arcade de sellette ou de jonction des lunettes.

15. Couvre-oeil selon la revendication 14,
**caractérisé en ce**
**que** l'attache de recouvrement (25) peut être fixée avec sa section d'extrémité libre (27) sur le couvre-oeil.

16. Couvre-oeil selon la revendication 15,
**caractérisé en ce**
**que** la section d'extrémité libre (27) peut être fixée de manière amovible sur le couvre-oeil en recouvrant et/ou saisissant par derrière l'arcade de sellette ou de jonction par un assemblage autoagrippant, un assemblage à crochet et boucle noeud papillon, un assemblage à tête de champignon, une jonction adhésive amovible, un assemblage par bouton à pression ou équivalent.

17. Couvre-oeil selon l'une des revendications 1 à 16,
**caractérisé en ce**
**que** le côté intérieur (28) du couvre-oeil (100) qui est tourné vers l'oeil du porteur du couvre-oeil est configuré comme une surface absorbant la lumière, de préférence noire.

18. Couvre-oeil selon l'une des revendications 1 à 17,
**caractérisé en ce**
**que** le couvre-oeil (100), en particulier la manchette partielle (11) et/ou les sections partielles (21, 22), est fabriqué en un matériau facile à découper à dimensions.
